# EUROPÄISCHE PATENTSCHRIFT

(11) **EP 3 487 762 B1**
(45) Veröffentlichungstag und Bekanntmachung des Hinweises auf die Patenterteilung: **12.08.2020**
(21) Anmeldenummer: 17743241.6
(22) Anmeldetag: 20.07.2017
(51) Int. Cl.: B64D 17/54, B64D 17/70, B64D 17/80

(54) **VORRICHTUNG UND VERFAHREN ZUM AUSWERFEN EINES FALLSCHIRMES**
DEVICE AND METHOD FOR EJECTING A PARACHUTE
DISPOSITIF ET PROCÉDÉ POUR ÉJECTER UN PARACHUTE

(30) Priorität: 21.07.2016 AT 506652016
(43) Veröffentlichungstag der Anmeldung: 29.05.2019
(73) Patentinhaber: Drone Rescue Systems GmbH, 8010 Graz (AT)
(72) Erfinder: MANNINGER, Markus, 8062 Kumberg (AT)
(74) Vertreter: Wirnsberger & Lerchbaum Patentanwälte OG
(86) Internationale Anmeldenummer: PCT/AT2017/060182
(87) Internationale Veröffentlichungsnummer: WO 2018/014064

(56) Entgegenhaltungen:
- WO-A1-2016/025444
- CN-A- 103 895 870
- CN-U- 202 609 086
- CN-U- 204 937 514
- DE-C1- 10 026 469
- FR-A1- 3 012 423
- US-A- 4 050 657

## Beschreibung

Die Erfindung betrifft eine Vorrichtung zum Auswerfen eines Fallschirmes, aufweisend ein Gehäuse mit einer Auswurföffnung, wobei das Gehäuse zur zumindest teilweisen Aufnahme des Fallschirmes geeignet ist.

Darüber hinaus betrifft die Erfindung ein Verfahren zum Auswerfen eines Fallschirmes.

Vorrichtungen und Verfahren der eingangs genannten Art sind aus dem Stand der Technik bekannt, um beispielsweise bei Fluggeräten mit versagenden Antriebseinheiten eine sanfte Landung zu gewährleisten, sodass Beschädigungen der Fluggeräte sowie von Gegenständen am Boden vermieden werden.

Bei Vorrichtungen des Standes der Technik erfolgt ein Auswerfen des üblicherweise über ein Seil mit dem Gehäuse verbundenen Fallschirmes mittels eines durch ein Energienetz des Fluggerätes versorgten Servomotors oder eines Gasdruckes, welcher beispielsweise in austauschbaren CO2-Katuschen bereitgestellt wird. Derartige Vorrichtungen haben mehrere Nachteile. Beispielsweise ist bei einer durch einen Servomotor aktivierten Auslösung ein Auswerfen des Fallschirmes bei einem Ausfall eines Bordenergienetzes nicht möglich. Werden Druckspeicher wie CO2-Katuschen eingesetzt, um den Fallschirm bei Bedarf auszuwerfen, ist nach einem erfolgten Auswurf des Fallschirmes ein Austausch des Druckspeichers erforderlich.

Derartige Vorrichtungen sind somit insbesondere für einen stark wachsenden Markt unbemannter, kostengünstiger und kleiner Flugobjekte wie Flugdrohnen nicht geeignet, da bei derartigen Flugdrohnen eine Ausfallsicherheit des Bordenergienetzes häufig nicht gewährleistet werden kann und ein Austauschen von Druckspeichern nach Auswerfen des Fallschirmes unerwünscht ist, zumal dadurch ein rascher neuerlicher Einsatz nicht möglich ist.

Hier setzt die Erfindung an. Aufgabe der Erfindung ist es, eine Vorrichtung der eingangs genannten Art anzugeben, welche zuverlässig und gleichzeitig mehrmals ohne Austausch von Elementen einsetzbar ist.

Des Weiteren soll ein Verfahren der eingangs genannten Art angegeben werden, welches ein zuverlässiges und mehrmaliges Auswerfen des Fallschirmes ermöglicht.

Die erste Aufgabe wird erfindungsgemäß durch eine Vorrichtung der eingangs genannten Art gelöst, bei welcher im Gehäuse ein bewegbarer Boden angeordnet ist, welcher über zumindest ein Federelement mit dem Gehäuse verbunden ist, wobei der Boden im Gehäuse mittels einer Fixierung lösbar fixierbar ist, wobei die Vorrichtung derart eingerichtet ist, dass wenn im Gehäuse ein Fallschirm angeordnet ist, der Boden bei Lösen der Fixierung durch das Federelement beschleunigt wird, sodass der Fallschirm mittels des Bodens durch die Auswurföffnung ausgeworfen wird, wobei das Federelement bei jeder Position des Bodens eine Vorspannung aufweist.

Im Rahmen der Erfindung wurde erkannt, dass ein zuverlässiges und von einer externen Energiequelle unabhängiges Auswerfen des Fallschirmes möglich ist, wenn die zum Auswerfen benötigte Energie in einem vorgespannten Federelement gespeichert ist. Zum Auslösen muss somit lediglich die Fixierung des Bodens gelöst werden, wonach der Boden mittels der im Federelement gespeicherten Energie beschleunigt wird, wobei der Fallschirm ausgeworfen wird. Ferner ist die Vorrichtung ohne Weiteres reversibel bzw. mehrfach einsetzbar, wenn nach einer Landung der Boden beispielsweise manuell wieder unter Spannung des Federelementes mittels der Fixierung bodenseitig im Gehäuse fixiert wird. Die erfindungsgemäße Vorrichtung eignet sich somit besonders für kostengünstige, unbemannte Flugdrohnen, wenngleich ein Einsatz der Vorrichtung nicht auf derartige Flugdrohnen beschränkt ist.

Das Federelement kann grundsätzlich beliebig ausgebildet sein. Um ein besonders geringes Gewicht der Vorrichtung bei gleichzeitig robuster Ausführung zu erreichen, hat es sich bewährt, dass das Federelement ein elastisches Band, insbesondere ein Gummiband, aufweist oder aus einem oder mehreren Gummibändern besteht. Dadurch wird beispielsweise verglichen mit einer Stahlfeder ein reduziertes Gewicht der Vorrichtung erreicht. Gleichzeitig hat sich ein elastisches Band, insbesondere ein Gummiband, als vorteilhaft in Bezug auf eine Materialermüdung erwiesen, sodass auch bei häufigem Einsatz der Vorrichtung eine konstante Auswurfkraft gewährleistet werden kann. Dies ist günstig, um ein rasches Öffnen des Fallschirmes zu erreichen, sodass ein Fluggerät auch dann noch mittels des Fallschirmes sicher zu Boden gebracht werden kann, wenn der Fallschirm erst bei geringer Höhe ausgelöst wird.

Das Gehäuse kann auf verschiedenste Weise ausgebildet sein. Üblicherweise ist das Gehäuse derart ausgebildet, dass dieses geeignet ist, den Fallschirm in einem in der Regel gefalteten Zustand in einer solchen Position relativ zum Boden zu halten, dass der Fallschirm mittels des Bodens auswerfbar ist. Bevorzugt ist es, dass der gefaltete Fallschirm zur Gänze im Gehäuse aufnehmbar ist. Das Gehäuse kann zum Schutz des Fallschirmes geschlossen oder zur Gewichtseinsparung mit Aussparungen oder als Gitter ausgebildet sein.

Mit Vorteil ist vorgesehen, dass das elastische Band über eine Umlenkung geführt ist, welche vorzugsweise eine Rolle aufweist. Dadurch kann das elastische Band in einem gespannten Zustand, in welchem der Boden mittels der Fixierung fixiert ist, auf eine Gesamtlänge gespannt werden, welche eine Gesamtlänge der Vorrichtung übersteigt. Somit kann auch bei einer kompakten Bauform der Vorrichtung eine für einen Auswurf erforderliche Auswurfkraft gewährleistet werden.

Es versteht sich, dass dabei verschiedenste Bauformen möglich sind. Beispielsweise kann das elastische Band an einem Ende fix mit dem Gehäuse verbunden, über eine ebenfalls mit dem Gehäuse verbundene Umlenkung geführt und an einem zweiten Ende fix mit dem Boden verbunden sein. Es kann jedoch auch ein umlaufendes Band eingesetzt werden, welches weder mit dem Boden noch mit dem Gehäuse fix, sondern ausschließlich über Umlenkungen mit Boden und Gehäuse verbunden ist, um die für einen Auswurf des Fallschirmes erforderliche Kraft zwischen Boden und Gehäuse auszubringen.

Eine Längenänderung des elastischen Bandes bei einem Auswurfvorgang entspricht in der Regel einem Weg, welchen der Boden in der Vorrichtung bei einem Auswerfen des Fallschirmes zurücklegt. Ist eine Umlenkung für das elastische Band vorgesehen, kann eine relative Dehnung des elastischen Bandes bei einem Spannen der Vorrichtung bzw. bei bodenseitigem Fixieren des Bodens im Gehäuse reduziert werden, sodass durch Dehnungen hervorgerufene Beschädigungen des elastischen Bandes bei oftmaliger Benutzung auf einfache Weise vermieden werden.

Günstig ist es, wenn der Boden relativ zum Gehäuse zwischen zwei Endpositionen bewegbar ist. Dadurch ist sichergestellt, dass der Boden auch bei einem Auswurf des Fallschirmes beim bzw. im Gehäuse verbleibt. Üblicherweise werden die Endpositionen durch Anschläge an einer Führung definiert, in welcher der Boden im Gehäuse geführt ist.

Um eine kompakte, leichtgewichtige und gleichzeitig zuverlässige Vorrichtung zu erreichen, ist es günstig, wenn das zumindest eine Federelement außenseitig am Gehäuse angeordnet und über in Führungen des Gehäuses geführte und aus dem Gehäuse ragende Führungsstifte des Bodens mit dem Boden verbunden ist. Da bei dieser Ausführungsform die Führungsstifte des Bodens gleichzeitig Angriffspunkte für das Federelement bilden, entfallen zusätzliche Bauelemente, sodass die Vorrichtung darüber hinaus besonders kostengünstig herstellbar ist.

Zur Erreichung einer besonders kompakten Bauform ist es günstig, wenn das Gehäuse etwa zylinderförmig ausgebildet ist und mehrere Federelemente regelmäßig über einen Umfang verteilt sind. Ferner wird der Boden dann sehr gleichmäßig durch die Federelemente beschleunigt, sodass eine gleichmäßige Bewegung des Bodens im Gehäuse gewährleistet ist und ein Verklemmen des Bodens im Gehäuse auch bei geringen Spaltmaßen zuverlässig vermieden wird.

Um auch auf kleinem Bauraum eine ausreichend große Auswurfkraft bzw. eine erforderliche Auswurfweite zu erreichen, ist bevorzugt vorgesehen, dass das Federelement bei jeder Position des Bodens eine Vorspannung aufweist. Dadurch ist ein Beschleunigen des Fallschirmes durch den mittels des Federelementes bewegten bzw. beschleunigten Bodens durchgehend beispielsweise von einem ersten Anschlag bis zu einem zweiten Anschlag möglich. Bei Einsatz eines elastischen Bandes als Federelement kann dies besonders einfach durch Führung des Bandes um eine Umlenkung erreicht werden. Beispielsweise kann hierzu das elastische Band an einem Ende fix mit dem Boden und an einem anderen Ende an einer bodenseitigen Position des Gehäuses fix mit dem Gehäuse verbunden sowie über eine mit dem Gehäuse kopfseitig positionierten Umlenkung geführt sein, um eine leichtgewichtige, robuste und besonders kompakte Bauform mit hoher Auswurfkraft zu erreichen.

Es versteht sich, dass die Vorspannung des Federelementes bei einem Auswerfen des Fallschirmes bei einer Bewegung des Bodens von einem bodenseitigen Ende des Gehäuses zu einem kopfseitigen Ende des Gehäuses, an welchem sich die Auswurföffnung befindet, üblicherweise abnimmt und maximal ist, wenn der Boden bodenseitig mittels der Fixierung fixiert ist.

Ein zuverlässiges Lösen der Fixierung ist auf einfache Weise möglich, wenn die Fixierung ein formschlüssiges Verbindungselement aufweist, insbesondere einen Zapfen oder einen Nocken, welcher in eine korrespondierende Ausnehmung eingreift, um den Boden gegen eine Spannung des Federelementes zu halten. Beispielsweise kann an einer Unterseite des Bodens ein Dorn mit einer Ausnehmung vorgesehen sein, in welche bei Fixierung des Bodens ein Zapfen oder ein Nocken eingreift, um den Boden gegen eine Spannkraft des oder der Federelemente bodenseitig mittels der Fixierung zu halten.

Üblicherweise ist die Vorrichtung derart ausgebildet, dass ein Lösen der Fixierung elektromagnetisch möglich ist. Da verglichen mit Vorrichtungen des Standes der Technik elektromagnetisch somit nur die Fixierung gelöst, und nicht der Fallschirm ausgeworfen werden muss, ist ein Betätigen der Vorrichtung mit wesentlich weniger elektrischer Energie möglich. Beispielsweise kann ein Zapfen oder ein Nocken eines formschlüssigen Verbindungselementes durch den Elektromagneten betätigbar ausgebildet sein, um ein Lösen der Fixierung mit geringer Energie zu erreichen.

Um eine besonders leichte und kleine Vorrichtung zu erreichen, ist es günstig, wenn ein Hebelmechanismus, insbesondere ein Kniehebel, vorgesehen ist, um die Fixierung zu lösen. Es kann dann ein Elektromagnet eingesetzt werden, welcher beispielsweise einen besonders kleinen Bauraum aufweist und mit welchem nur eine geringe Kraft aufbringbar ist, da die vom Elektromagneten aufgebrachte Kraft über den Hebelmechanismus übersetzt wird, um ein robustes Lösen der Fixierung zu erreichen.

Bei Einsatz eines Kniehebels ist die Vorrichtung in der Regel derart ausgebildet, dass der Boden im Gehäuse durch den Kniehebel fixierbar ist, wenn der Kniehebel in einer überstreckten Position ist. Eine überstreckte Position wird bei einem Kniehebel durch ein Bewegen über einen Totpunkt hinaus bis zu einem Kniehebelanschlag in eine stabile Position erreicht, sodass der Kniehebel verriegelt ist. Der Kniehebelanschlag kann beispielsweise durch einen Anschlag in einem den Kniehebel antreibenden Aktuator wie einem Elektromagnet gebildet werden. Dadurch können auch große Spannkräfte des Federelementes mittels des Kniehebels einfach und ohne Energieaufwand gehalten bzw. über den Kniehebelanschlag abgestützt werden. Zum Lösen der Fixierung wird der Kniehebel dann einfach und mit geringem Kraftaufwand aus der überstreckten Position unter den Totpunkt in eine instabile Position bewegt, sodass der Boden durch das Federelement beschleunigt und ein Fallschirm ausgeworfen wird.

Bei Einsatz eines Kniehebels wird nur wenig Energie zum Auslösen benötigt, weil der Kniehebel nur aus einer überstreckten Position in eine instabile Position gebracht werden muss, sodass ein Energiespeicher zur Auslösung ebenfalls klein und leicht ausgebildet sein kann.

Es ist von Vorteil, wenn ein Energiespeicher vorgesehen ist, mit welchem ein Lösen der Fixierung ohne zusätzliche externe Energieversorgung möglich ist. Dies ermöglicht ein besonders zuverlässiges Auswerfen des Fallschirmes auch bei elektromagnetischem Lösen der Fixierung unabhängig von einer externen Energieversorgung. Beispielsweise kann der Energiespeicher als Akkumulator ausgebildet sein, welcher vor einem Einsatz oder bei einem Betrieb über ein Bordnetz eines Fahrzeuges geladen wird, mit welchem die Vorrichtung verbunden wird, beispielsweise über ein Bordnetz einer Flugdrohne.

Insbesondere bei Einsatz eines Kniehebels wie vorstehend ausgeführt kann der Energiespeicher auch als Kondensator ausgebildet sein, um eine besonders kleine und leichtgewichtige Bauweise zu ermöglichen, zumal bei Einsatz eines Kniehebels ein Energiebedarf zur Auslösung gering ist. Ein Einsatz eines Kondensators hat unter anderem den Vorteil, dass der Kondensator unmittelbar nach Verbindung mit einem Bordnetz eines Fahrzeuges, mit welchem die Vorrichtung verbunden ist, vollständig geladen ist. Im Gegensatz dazu wird bei Einsatz eines Akkumulators ein vollständig geladener Zustand in der Regel erst nach mehreren Minuten oder Stunden erreicht. Anstelle eines Kondensators kann natürlich auch jede andere Art eines insbesondere kapazitiven Energiespeichers eingesetzt werden.

Günstig ist es, wenn ein Funkempfänger vorgesehen und derart mit der Fixierung verbunden ist, dass die Fixierung mittels eines Funksignals gelöst werden kann. Dadurch kann bei einer ferngesteuerten Flugdrohne der Fallschirm auf einfache Weise manuell oder automatisiert ferngesteuert ausgelöst werden, wenn beispielsweise absehbar ist, dass andernfalls Beschädigungen unvermeidbar wären.

Es hat sich als günstig erwiesen, dass zumindest ein Beschleunigungssensor vorgesehen ist, welcher derart mit der Fixierung in Wirkverbindung steht, dass die Fixierung bei einer gemessenen Beschleunigung, welche einen definierten Wert überschreitet, gelöst wird. Somit kann beispielsweise ein automatisiertes Auswerfen des Fallschirmes erreicht werden, wenn sich ein Gegenstand mit welchem die Vorrichtung verbunden ist, in einem kritischen Zustand befindet, beispielsweise im freien Fall. Die Vorrichtung kann derart ausgebildet sein, dass der definierte Wert beliebig einstellbar oder fix voreingestellt ist.

In der Regel ist ein Beschleunigungssensor auch als Neigungssensor einsetzbar. Es kann jedoch natürlich auch ergänzend ein separater Neigungssensor vorgesehen sein, um einen kritischen Zustand mit hoher Zuverlässigkeit zu bestimmen und den Fallschirm rechtzeitig auslösen zu können. In dem Zusammenhang können natürlich auch weitere aus dem Stand der Technik bekannte Sensoren vorgesehen sein, um für eine Fallschirmauslösung relevante Zustandsgrößen wie beispielsweise eine Höhe über einem Boden, Wetterbedingungen, einen Ladezustand bzw. Füllstand eines Energiespeichers für ein Antriebsaggregat und dergleichen zu bestimmen. Insbesondere kann ein barometrischer Höhensensor vorgesehen sein, um eine Höhe, Höhenänderungen sowie eine vertikale Geschwindigkeit und eine vertikale Beschleunigung zu bestimmen.

Günstig ist es, wenn eine Datenverarbeitungseinrichtung vorgesehen ist, mit welcher ein Lösen der Fixierung automatisiert erfolgen kann. Dadurch können verschiedenste Zustände definiert werden, bei welchen die Fixierung gelöst und der Fallschirm ausgeworfen wird. Somit ist eine einfache und flexible Anpassung der Vorrichtung an unterschiedlichste Gegenstände, insbesondere unterschiedliche Fluggeräte, möglich, welche unterschiedliche zulässige Betriebsbedingungen aufweisen. In der Regel ist die Datenverarbeitungseinrichtung als Mikrocontroller ausgebildet, sodass die Vorrichtung platzsparend und mit geringem Gewicht sowie niedrigem Energiebedarf ausgeführt werden kann.

Normalerweise ist ein Datenspeicher vorgesehen, in welchem Maximaldaten, insbesondere betreffend maximale Beschleunigungen, gespeichert sind, wobei Sensoren zur Bestimmung aktueller entsprechender Daten bei einem Betrieb vorgesehen sind, wobei die Vorrichtung derart eingerichtet ist, dass die Fixierung gelöst wird, wenn mittels der Datenverarbeitungseinrichtung festgestellt wird, dass aktuell gemessene Daten gespeicherte Maximaldaten überschreiten. Somit könnten Sensoren zur Bestimmung unterschiedlichster Daten wie einer aktuellen Flughöhe, einer Geschwindigkeit, Wetterbedingungen und dergleichen vorgesehen sein und diese Daten zur automatisierten Auslösung des Fallschirmes genutzt werden. Dadurch können Beschädigungen an einem Fluggerät, an Gegenständen am Boden sowie Verletzungen von Personen am Boden auf effektive Weise mit einer erfindungsgemäßen Vorrichtung automatisiert vermieden werden.

In dem Zusammenhang ist es günstig, wenn die Datenverarbeitungseinrichtung zur Bestimmung und Speicherung von Daten, insbesondere Beschleunigungen, eingerichtet ist, welche bei einem normalen Betrieb eines Gegenstandes auftreten, mit welchem die Vorrichtung verbunden ist. Bei dieser Ausführung ist es somit nicht erforderlich, die zulässigen Maximaldaten vorab zu definieren, vielmehr ist die Vorrichtung dabei in der Lage zulässige Maximaldaten selbst zu ermitteln. Dadurch wird eine selbstlernende Vorrichtung erreicht, sodass die Vorrichtung beispielsweise sowohl an einem mit hoher Geschwindigkeit bzw. hoher Beschleunigung bewegten Gegenstand wie einer Flugdrohne als auch an einem langsam bewegten Gegenstand wie einem Ballon oder einem Segelflugzeug effektiv genutzt werden kann, ohne dass eine Änderung einer Programmierung erforderlich ist.

Die erfindungsgemäße Vorrichtung kann grundsätzlich an jedem Gegenstand eingesetzt werden, beispielsweise an Fahrzeugen. Besonders günstig ist es bei einem Fluggerät, insbesondere einer Flugdrohne, mit einer Vorrichtung zum Auswerfen eines Fallschirmes, wenn die Vorrichtung erfindungsgemäß ausgebildet ist. Dadurch wird eine hohe Zuverlässigkeit bei gleichzeitig geringem Gewicht erzielt.

Die weitere Aufgabe wird erfindungsgemäß durch ein Verfahren der eingangs genannten Art gelöst, bei welchem ein Boden in einem Gehäuse einer Vorrichtung, welche insbesondere erfindungsgemäß ausgebildet ist, an einer Fixierung unter Spannung eines Federelementes lösbar fixiert wird, wonach die Fixierung bei Eintreten eines vorbestimmten Zustandes gelöst wird, wonach der Fallschirm unter zumindest teilweiser Entspannung des Federelementes mittels des Bodens durch eine Auswurföffnung aus dem Gehäuse ausgeworfen wird, wobei der Boden bis zu einer Endposition bewegt wird, wobei das Federelement bei jeder Position des Bodens unter einer Vorspannung gehalten wird.

Ein derartiges Verfahren ist robust, mehrmalig wiederholt umsetzbar und kann unabhängig von einer Energieversorgung eines Fahrzeuges umgesetzt werden, an welchem die Vorrichtung angeordnet ist.

In der Regel wird der Boden im Gehäuse bodenseitig an einem der Auswurföffnung gegenüberliegenden Ende des Gehäuses fixiert und befindet sich die Fixierung ebenfalls am bodenseitigen Ende des Gehäuses.

Günstig ist es, wenn charakteristische Daten betreffend einen Gegenstand, mit welchem die Vorrichtung verbunden ist, insbesondere eine Beschleunigung, gemessen werden und die Fixierung vorzugsweise automatisiert gelöst wird, wenn die gemessenen Daten einen oder mehrere definierte zulässige Maximalwerte überschreiten. Dadurch können Beschädigungen auf besonders effektive Weise vermieden werden, wenn der Gegenstand, beispielsweise ein Fluggerät, einen unzulässigen Betriebszustand erreicht.

Vorteilhaft ist es, dass zulässige Maximalwerte automatisiert bei einem Normalbetrieb bestimmt und in einem Datenspeicher gespeichert werden, wonach gemessene Daten mit den gespeicherten Daten verglichen werden, um einen außergewöhnlichen Betriebszustand zu bestimmen. Dadurch wird ein selbstlernendes Verfahren erreicht, welches ohne manuelle Anpassung bei unterschiedlichsten Fluggeräten umgesetzt werden kann, sodass einerseits ein Fehlauswurf des Fallschirmes bei zulässigen Betriebsbedingungen vermieden und andererseits auch ein zuverlässiges Auswerfen des Fallschirmes bei unzulässigen Betriebsbedingungen gewährleistet werden können.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 bis 4 ein erstes Ausführungsbeispiel einer erfindungsgemäßen Vorrichtung in unterschiedlichen Ansichten;
Fig. 5 eine Schnittdarstellung einer weiteren erfindungsgemäßen Vorrichtung.

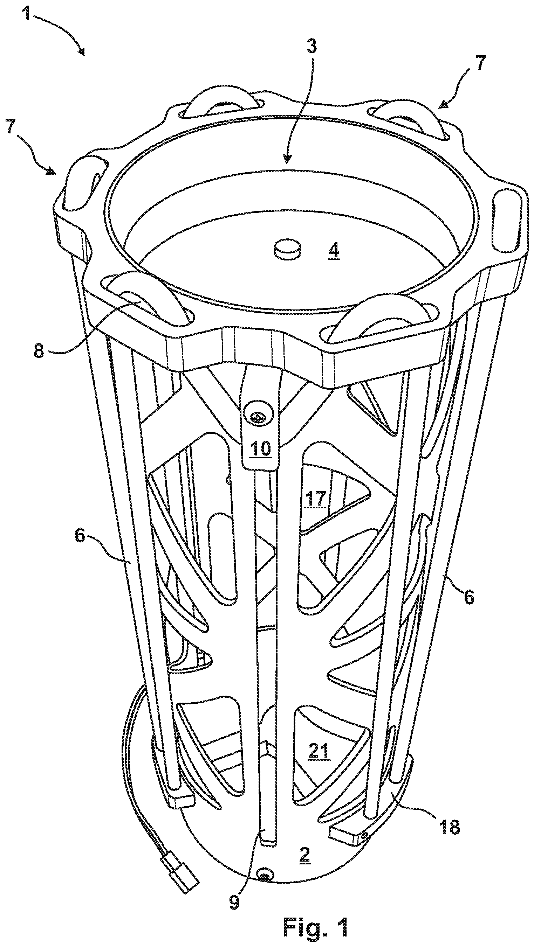

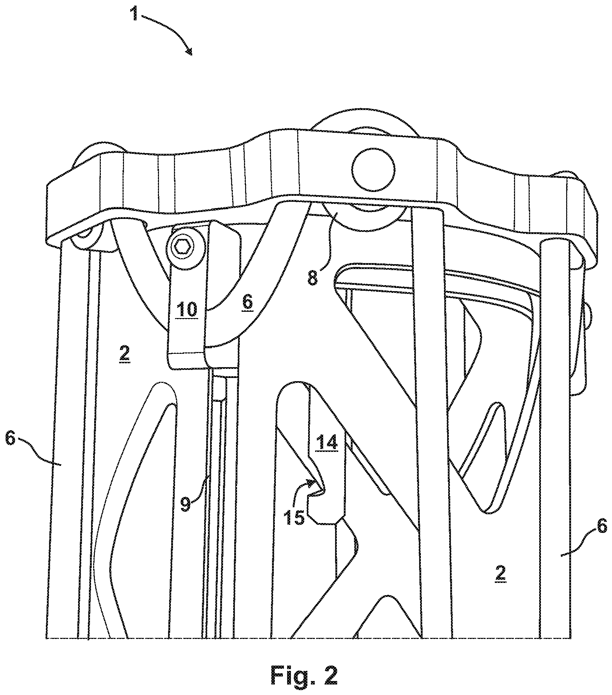

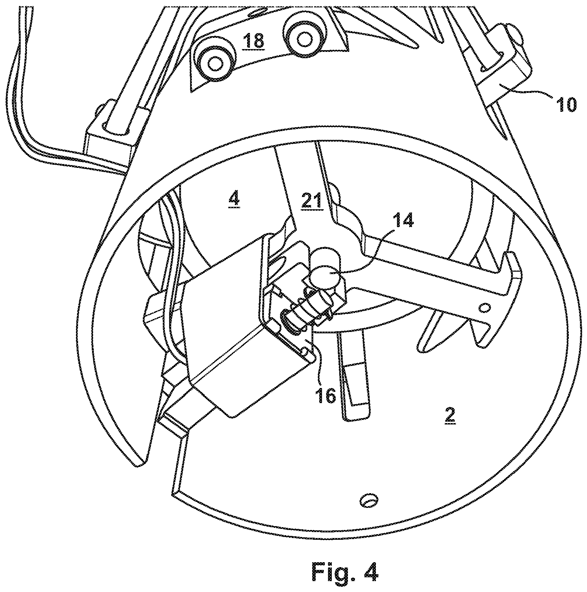

Fig. 1 bis 4 zeigen ein erstes Ausführungsbeispiel einer erfindungsgemäßen Vorrichtung 1, wobei Fig. 1 die Vorrichtung 1 in isometrischer Darstellung und Fig. 2 bis 4 verschiedene Details der Vorrichtung 1 zeigen. Wie ersichtlich weist die Vorrichtung 1 ein etwa zylindrisches Gehäuse 2 auf, in welchem ein Boden 4 zwischen zwei Endpositionen bewegbar ist. Die Endpositionen sind durch Anschläge 20 in Führungen 9 definiert, in welchen der Boden 4 über aus dem Gehäuse 2 ragenden Führungsstiften 10 geführt ist. Der Boden 4 ist relativ zum Gehäuse 2 zwischen den Endpositionen entlang der Führung 9 bewegbar, wobei der Boden 4 über drei als elastische Bänder 6 ausgebildete Federelemente derart mit dem Gehäuse 2 verbunden ist, dass eine Spannung in den Federelementen steigt, wenn der Boden 4 von einem Bereich einer Auswurföffnung 3 des Gehäuses 2 bzw. einem kopfseitigen Ende des Gehäuses 2 zu einem gegenüberliegenden bodenseitigen Ende des Gehäuses 2 bewegt wird, um die Vorrichtung 1 zu spannen. An dem der Auswurföffnung 3 gegenüberliegenden, bodenseitigen Ende wird der Boden 4 durch die Fixierung 5 fixiert.

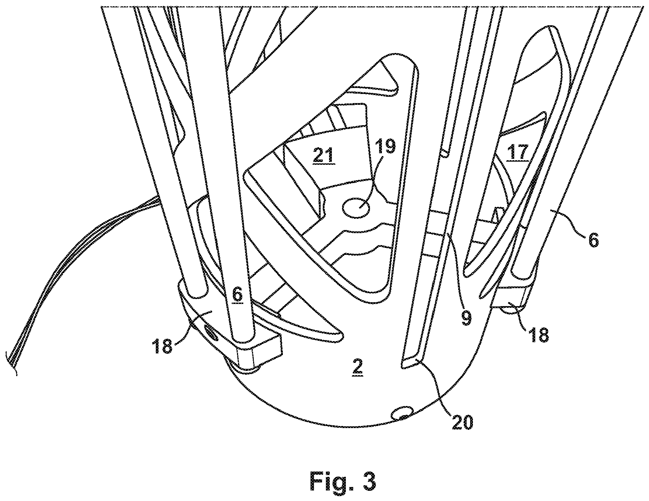

Mittels der Fixierung 5 ist der Boden 4 im Gehäuse 2 bodenseitig lösbar fixierbar, wobei die Befestigung formschlüssig mittels eines mit einem Elektromagneten 16 verbundenen Zapfens erfolgt, welcher in eine Ausnehmung 15 eines mit dem Boden 4 verbundenen Dorns 14 eingreift. Der Dorn 14 ist dabei in einer in Fig. 3 ersichtlichen Dornführung 19 einer bodenseitig im Gehäuse 2 positionierten Halterung 21 aufgenommen. An der Unterseite der Halterung 21 ist der Elektromagnet 16 samt Zapfen angeordnet.

Um die Fixierung 5 zu lösen, wird der Elektromagnet 16 betätigt, sodass der Zapfen vom Dorn 14 gelöst wird, wodurch der Boden 4 relativ zum Gehäuse 2 mittels einer in den elastischen Bändern 6 gespeicherten Energie zur Auswurföffnung 3 beschleunigt wird. Befindet sich ein nicht dargestellter Fallschirm zumindest teilweise im Gehäuse 2, wird der Fallschirm durch den Boden 4 beschleunigt und durch die Auswurföffnung 3 ausgeworfen.

Wie dargestellt sind die elastischen Bänder 6 bodenseitig bzw. an einem der Auswurföffnung 3 gegenüberliegenden Ende des Gehäuses 2 an einer Bandfixierung 18 fix mit dem Gehäuse 2 verbunden und über eine im Bereich der Auswurföffnung 3 positionierte Umlenkung 7 geführt, welche Rollen 8 aufweist. Weiter sind die elastischen Bänder 6 über aus dem Gehäuse 2 ragenden Führungsstifte 10 mit dem Boden 4 verbunden. Diese Verbindung der elastischen Bänder 6 mit dem Boden 4 kann ebenfalls über eine Umlenkung 7 oder eine fixe Einspannung an den Führungsstiften 10 erfolgen. Die elastischen Bänder 6 sind derart gedehnt angeordnet, dass diese auch dann eine Spannung aufweisen, wenn der Boden 4 an einem im Bereich der Auswurföffnung 3 positionierten Anschlag 20 anliegt. Dadurch ist eine Kraftaufbringung auf den Boden 4 über die elastischen Bänder 6 während einer Bewegung des Bodens 4 zwischen den Anschlägen 20 bzw. bei der Bewegung des Bodens 4 von einem Ende des Gehäuses 2 zur am gegenüberliegenden Ende befindlichen Auswurföffnung 3 hin möglich, wodurch eine hohe Auswurfgeschwindigkeit eines mit dem Boden 4 transportierten Fallschirmes erreicht werden kann. Dies ermöglicht auch bei geringer Flughöhe eine sichere Landung.

Mit dieser Ausführung kann trotz kleiner Baugröße der Vorrichtung 1 ein elastisches Band 6 mit einer zur Aufbringung einer entsprechenden Kraft erforderlichen Länge eingesetzt werden. Darüber hinaus muss das elastische Band 6 bei dieser Bauweise bei einer Bewegung des Bodens 4 zwischen den Anschlägen 20 nur um etwa 100 % einer spannungsfreien Länge des elastischen Bandes 6 gedehnt werden. Werden mehrere Umlenkungen 7 eingesetzt, sind auch geringere Dehnungen des elastischen Bandes 6 möglich. Dadurch werden durch starke Dehnungen bedingte Ermüdungserscheinungen des elastischen Bandes 6 vermieden.

Des Weiteren ist ersichtlich, dass das Gehäuse 2 zusätzlich zu den Führungen 9 Aussparungen 17 aufweist, sodass ein besonders geringes Gewicht der Vorrichtung 1 erzielt wird. Das Gehäuse 2 besteht in der Regel aus einem leichtgewichtigen Material, beispielsweise Kunststoff, insbesondere einem faserverstärkten Kunststoff, bzw. einem Kohlefaserverbundwerkstoff. Der Boden 4 besteht normalerweise ebenfalls aus einem leichtgewichtigen Material wie Kunststoff.

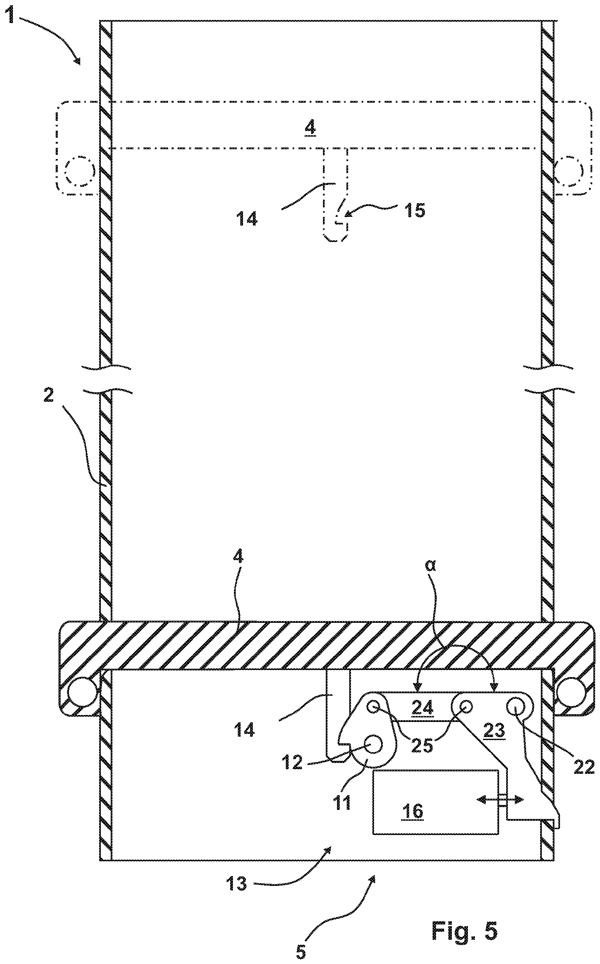

Fig. 5 zeigt schematisch einen Schnitt durch eine weitere erfindungsgemäße Vorrichtung 1, welche ebenfalls ein etwa zylinderförmiges Gehäuse 2 aufweist. Wie dargestellt weist die Fixierung 5 bei dieser Ausführungsform einen Mechanismus 13 auf, welcher mit dem Elektromagneten 16 einerseits und einem formschlüssigen Verbindungsmittel andererseits verbunden ist. Der Mechanismus 13 weist eine Übersetzung auf, sodass eine Bewegung des Elektromagneten 16 mit großem Weg und kleiner Kraft in eine Bewegung des formschlüssigen Verbindungsmittels mit geringerem Weg und größerer Kraft übersetzt wird. Das formschlüssige Verbindungsmittel weist in der in Fig. 5 dargestellten Ausführung einen um eine Nockenachse 12 drehbaren Nocken 11 auf, welcher Nocken 11 in eine Ausnehmung 15 des mit dem Boden 4 verbundenen Dorns 14 eingreift, um den Boden 4 mittels der Fixierung 5 formschlüssig zu fixieren. Um die Fixierung 5 zu lösen wird der Nocken 11 über den Mechanismus 13 durch den Elektromagneten 16 gedreht, sodass der Dorn 14 freigegeben wird. Der Mechanismus 13 kann als Hebelmechanismus ausgebildet sein und wie dargestellt insbesondere einen Kniehebel aufweisen.

Der durch den Elektromagnet 16 betätigbare Kniehebel wird dabei durch einen ersten Hebel 23 und einen zweiten Hebel 24 gebildet, über welche der Nocken 11 betätigbar ist. Der Mechanismus 13 ist gegenüber dem Gehäuse 2 um die Nockenachse 12 und eine Hebelachse 22 drehbar gelagert. Der mit dem Elektromagnet 16 verbundene erste Hebel 23 ist mit dem zweiten Hebel 24 über ein Drehgelenk 25 verbunden. Ebenso ist der zweite Hebel 24 mit dem Nocken 11 über ein Drehgelenk 25 verbunden. In einer verriegelten Position wie dargestellt beträgt ein Winkel α zwischen dem ersten Hebel 23 und dem zweiten Hebel 24 geringfügig mehr als 180°. Aus dieser Position kann der erste Hebel 23 nicht weiter im Uhrzeigersinn um die Hebelachse 22 gedreht werden, weil der Kniehebel an einem beispielsweise durch den Elektromagneten 16 gebildeten Kniehebelanschlag anliegt und somit in dieser Richtung verriegelt ist.

Eine vom Zapfen auf den Nocken 11 wirkende Kraft nach oben wird somit über den Kniehebelanschlag bzw. den fix im Gehäuse gelagerten den Elektromagneten 16 mechanisch abgestützt, sodass der Kniehebel den Boden 4 über den Nocken 11 gegen eine Federkraft der elastischen Bänder 6 auch ohne Energiezufuhr hält. Im Elektromagnet 16 wird daher keine elektrische Energie zum Halten des Bodens 4 benötigt.

Bei Lösen der Fixierung 5 wird der erste Hebel 23 durch kurze Betätigung des Elektromagneten 16 gegen den Uhrzeigersinn um die Hebelachse 22 gedreht, sodass der Kniehebel wieder unter einen Totpunkt in eine instabile Position bewegt wird, wobei der Winkel α weniger als 180° beträgt. Ein anschließendes vollständiges Öffnen bzw. Lösen der Fixierung 5 und des Kniehebels erfolgt über den Nocken 11 und die Federkraft, sodass nach Entriegeln des Kniehebels bzw. Bewegen des Kniehebels in eine Position unterhalb des Totpunktes grundsätzlich dem Elektromagneten 16 keine Energie mehr zugeführt werden muss.

Zum Lösen der Fixierung 5 muss somit dem Elektromagnet 16 nur ein kurzer Energieimpuls zugeführt werden, um den Kniehebel aus einer stabilen Position oberhalb des Totpunktes, in welcher der Winkel α mehr als 180° beträgt, in eine instabile Position unterhalb des Totpunktes zu bewegen, in welcher der Winkel α weniger als 180° beträgt.

Dadurch kann mit minimalem Energiebedarf und sehr geringer Kraft des Elektromagneten 16 mittels der Übersetzung des Mechanismus 13 ein zuverlässiges Lösen der Fixierung 5 auch bei besonders geringer Baugröße des Elektromagneten 16 erreicht werden. Dies ermöglicht eine sehr leichtgewichtige Ausbildung der Vorrichtung 1. Bei Fluggeräten ist eine maximale Flugdauer üblicherweise durch ein Gewicht limitiert, weswegen mit einer leichtgewichtigen Vorrichtung 1 längere Flugzeiten erzielbar sind.

In Fig. 5 ist der Boden 4 des Weiteren in einer kopfseitigen Position dargestellt, welche der Boden 4 nach Lösen der Fixierung 5 und Auswurf eines nicht dargestellten Fallschirmes einnimmt, wenn der Boden 4 an einem oberen Anschlag 20 der Führung 9 anliegt. Von dieser Position aus kann die Vorrichtung 1 durch Bewegen des Bodens 4 zu einem bodenseitigen Ende des Gehäuses 2 wieder gespannt werden, an welchem bodenseitigen Ende sich die Fixierung 5 befindet. Der Fallschirm ist üblicherweise durch ein Seil oder dergleichen mit der Vorrichtung 1 verbunden.

Zum Auslösen des Elektromagneten 16 ist ein nicht dargestellter Mikrocontroller vorgesehen, welcher mit einem Datenspeicher und Sensoren wie beispielsweise Beschleunigungssensoren in Verbindung steht, sodass die Fixierung 5 abhängig von Bewegungen bzw. Beschleunigungen der Vorrichtung 1 gelöst werden kann, um den Fallschirm dann auszuwerfen, wenn ein Fluggerät, mit welchem die Vorrichtung 1 verbunden ist, einen unzulässigen Betriebszustand einnimmt, beispielsweise wenn sich das Fluggerät im freien Fall befindet.

Der Mikrocontroller ist dabei derart eingerichtet, dass dieser bei einem normalen Betrieb des Fluggerätes Daten im Datenspeicher speichert und daraus maximal zulässige Werte eines üblichen bzw. zulässigen Betriebszustandes abgeleitet werden können. Hierzu kann der Mikrocontroller gezielt in einen Lernmodus versetzt werden. Dadurch wird eine selbstlernende Vorrichtung 1 erreicht, welche auf einfache Weise an unterschiedlichste Fluggeräte angepasst werden kann. Dies ist insbesondere in Anbetracht einer stark zunehmenden Variantenvielfalt von Fluggeräten wie unbemannten Flugdrohnen günstig, um verschiedenste Flugdrohnen mit der Vorrichtung 1 auf einfache Weise nachrüsten zu können.

Mit der erfindungsgemäßen Vorrichtung 1 sowie dem entsprechenden Verfahren ist ein zuverlässiges Auslösen eines Fallschirmes auf platz- und gewichtssparende Weise zuverlässig möglich, sodass insbesondere Flugdrohnen automatisiert und zuverlässig zu Boden 4 gebracht werden können, wenn beispielsweise ein Antrieb versagt oder die Flugdrohne von einer Windböe erfasst wird.

Dadurch können Beschädigungen der Flugdrohne sowie von Gegenständen am Boden ebenso vermieden werden wie durch unkontrolliert herabfallende Flugdrohnen verursachte Verletzungen von Personen am Boden.

Des Weiteren ist durch das geringe Gewicht verglichen mit Vorrichtungen 1 des Standes der Technik eine besonders lange Flugdauer der Flugdrohne möglich. Aufgrund des einfachen Aufbaues ist die Vorrichtung 1 kostengünstig herstellbar, sodass bestehende Flugdrohnen mit geringen Kosten mit einer erfindungsgemäßen Vorrichtung 1 nachgerüstet werden können, um einen sicheren Flugbetrieb zu ermöglichen.

## Patentansprüche

1. Vorrichtung (1) zum Auswerfen eines Fallschirmes, aufweisend ein Gehäuse (2) mit einer Auswurföffnung (3), wobei das Gehäuse (2) zur zumindest teilweisen Aufnahme des Fallschirmes geeignet ist, wobei im Gehäuse (2) ein bewegbarer Boden (4) angeordnet ist, welcher über zumindest ein Federelement mit dem Gehäuse (2) verbunden ist, wobei der Boden (4) im Gehäuse (2) mittels einer Fixierung (5) lösbar fixierbar ist, wobei die Vorrichtung (1) derart eingerichtet ist, dass wenn im Gehäuse (2) ein Fallschirm angeordnet ist, der Boden (4) bei Lösen der Fixierung (5) durch das Federelement beschleunigt wird, sodass der Fallschirm mittels des Bodens (4) durch die Auswurföffnung (3) ausgeworfen wird, **dadurch gekennzeichnet, dass** das Federelement bei jeder Position des Bodens (4) eine Vorspannung aufweist.

2. Vorrichtung (1) nach Anspruch 1, **dadurch gekennzeichnet, dass** das Federelement ein elastisches Band (6), insbesondere ein Gummiband, aufweist.

3. Vorrichtung (1) nach Anspruch 2, **dadurch gekennzeichnet, dass** das elastische Band (6) über eine Umlenkung (7) geführt ist, welche vorzugsweise eine Rolle (8) aufweist.

4. Vorrichtung (1) nach einem der Ansprüche 1 bis 3, **dadurch gekennzeichnet, dass** der Boden (4) relativ zum Gehäuse (2) zwischen zwei Endpositionen bewegbar ist.

5. Vorrichtung (1) nach einem der Ansprüche 1 bis 4, **dadurch gekennzeichnet, dass** das zumindest eine Federelement außenseitig am Gehäuse (2) angeordnet und über in Führungen (9) des Gehäuses (2) geführte und aus dem Gehäuse (2) ragende Führungsstifte (10) des Bodens (4) mit dem Boden (4) verbunden ist.

6. Vorrichtung (1) nach einem der Ansprüche 1 bis 5, **dadurch gekennzeichnet, dass** die Fixierung (5) ein formschlüssiges Verbindungselement aufweist, insbesondere einen Zapfen oder einen Nocken (11), welcher in eine korrespondierende Ausnehmung (15) eingreift, um den Boden (4) gegen eine Spannung des Federelementes zu halten.

7. Vorrichtung (1) nach einem der Ansprüche 1 bis 6, **dadurch gekennzeichnet, dass** ein Funkempfänger vorgesehen und derart mit der Fixierung (5) verbunden ist, dass die Fixierung (5) mittels eines Funksignals gelöst werden kann.

8. Vorrichtung (1) nach einem der Ansprüche 1 bis 7, **dadurch gekennzeichnet, dass** zumindest ein Beschleunigungssensor vorgesehen ist, welcher derart mit der Fixierung (5) in Wirkverbindung steht, dass die Fixierung (5) bei einer gemessenen Beschleunigung, welche einen definierten Wert überschreitet, gelöst wird.

9. Vorrichtung (1) nach einem der Ansprüche 1 bis 8, **dadurch gekennzeichnet, dass** eine Datenverarbeitungseinrichtung vorgesehen ist, mit welcher ein Lösen der Fixierung (5) automatisiert erfolgen kann.

10. Vorrichtung (1) nach Anspruch 9, **dadurch gekennzeichnet, dass** ein Datenspeicher vorgesehen ist, in welchem Maximaldaten, insbesondere betreffend maximale Beschleunigungen, gespeichert sind, wobei Sensoren zur Bestimmung aktueller entsprechender Daten bei einem Betrieb vorgesehen sind, wobei die Vorrichtung (1) derart eingerichtet ist, dass die Fixierung (5) gelöst wird, wenn mittels der Datenverarbeitungseinrichtung festgestellt wird, dass aktuell gemessene Daten gespeicherte Maximaldaten überschreiten.

11. Vorrichtung (1) nach Anspruch 10, **dadurch gekennzeichnet, dass** die Datenverarbeitungseinrichtung zur Bestimmung und Speicherung von Daten, insbesondere Beschleunigungen, eingerichtet ist, welche bei einem normalen Betrieb eines Gegenstandes auftreten, mit welchem die Vorrichtung (1) verbunden ist.

12. Fluggerät, insbesondere Drohne, mit einer Vorrichtung (1) zum Auswerfen eines Fallschirmes, **dadurch gekennzeichnet, dass** die Vorrichtung (1) nach einem der Ansprüche 1 bis 11 ausgebildet ist.

13. Verfahren zum Auswerfen eines Fallschirmes, wobei ein Boden (4) in einem Gehäuse (2) einer Vorrichtung (1), insbesondere einer Vorrichtung (1) nach einem der Ansprüche 1 bis 11, an einer Fixierung (5) unter Spannung eines Federelementes lösbar fixiert wird, wonach die Fixierung (5) bei Eintreten eines vorbestimmten Zustandes gelöst wird, wonach der Fallschirm unter zumindest teilweiser Entspannung des Federelementes mittels des Bodens (4) durch eine Auswurföffnung (3) aus dem Gehäuse (2) ausgeworfen wird, **dadurch gekennzeichnet, dass** der Boden (4) bis zu einer Endposition bewegt wird, wobei das Federelement bei jeder Position des Bodens (4) unter einer Vorspannung gehalten wird.

14. Verfahren nach Anspruch 13, **dadurch gekennzeichnet, dass** charakteristische Daten betreffend einen Gegenstand, mit welchem die Vorrichtung (1) verbunden ist, insbesondere eine Beschleunigung, gemessen werden und die Fixierung (5) vorzugsweise automatisiert gelöst wird, wenn die gemessenen Daten einen oder mehrere definierte zulässige Maximalwerte überschreiten.

15. Verfahren nach Anspruch 13 oder 14, **dadurch gekennzeichnet, dass** zulässige Maximalwerte automatisiert bei einem Normalbetrieb bestimmt und in einem Datenspeicher gespeichert werden, wonach gemessene Daten mit den gespeicherten Daten verglichen werden, um einen außergewöhnlichen Betriebszustand zu bestimmen.

## Claims

1. Device (1) for ejecting a parachute comprising a housing (2) with an ejection opening (3), wherein the housing (2) is suitable for at least partially accommodating the parachute, wherein a movable base (4), which is connected to the housing (2) via at least one spring element, is arranged in the housing (2), wherein the base (4) is detachably fixable in the housing (2) by means of a fixing means (5), wherein the device (1) is configured in such a way that, when a parachute is arranged in the housing (2), the base (4) is accelerated by the spring element upon triggering the fixing means (5) such that the parachute is ejected through the ejection opening (3) by means of the base (4), **characterized in that** the spring element is pretensioned in every position of the base (4).

2. Device (1) according to claim 1, **characterized in that** the spring element has an elastic band (6), in particular a rubber band.

3. Device (1) according to claim 2, **characterized in that** the elastic band (6) is guided over a deflection (7) which preferably has a roller (8).

4. Device (1) according to one of claims 1 to 3, **characterized in that** the base (4) is movable, relative to the housing (2), between two end positions.

5. Device (1) according to one of claims 1 to 4, **characterized in that** the at least one spring element is arranged on the exterior on the housing (2) and is guided in guides (9) of the housing (2) and is connected to the base (4) via guide pins (10) of the base (4) projecting out of the housing (2).

6. Device (1) according to one of claims 1 to 5, **characterized in that** the fixing means (5) has a positive-locking connection element, in particular a journal or a cam (11) which engages in a corresponding recess (15) in order to hold the base (4) against a tension of the spring element.

7. Device (1) according to one of claims 1 to 6, **characterized in that** a radio receiver is provided and is connected to the fixing means (5) in such a way that the fixing means (5) may be triggered by means of a radio signal.

8. Device (1) according to one of claims 1 to 7, **characterized in that** at least one acceleration sensor is provided which is in operative connection with the fixing means (5) in such a way that the fixing means (5) is triggered at a measured acceleration which exceeds a defined value.

9. Device (1) according to one of claims 1 to 8, **characterized in that** a data processing device is provided by means of which a triggering of the fixing means (5) may be carried out automatically.

10. Device (1) according to claim 9, **characterized in that** a data memory is provided in which maximum data, in particular relating to maximum accelerations, are stored, wherein sensors for determining current corresponding data are provided during operation, wherein the device (1) is designed in such a way that the fixing means (5) is triggered when it is determined by means of the data processing device that currently measured data exceed stored maximum data.

11. Device (1) according to claim 10, **characterized in that** the data processing device is designed for determining and storing data, in particular accelerations, which occur during normal operation of an object to which the device (1) is connected.

12. Aircraft, in particular a drone, with a device (1) for ejecting a parachute, **characterized in that** the device (1) is designed according to one of claims 1 to 11.

13. Method for ejecting a parachute, wherein a base (4) in a housing (2) of a device (1), in particular a device (1) according to one of claims 1 to 11, is detachably fixed on a fixing means (5) under the tension of a spring element, whereupon the fixing means (5) is triggered upon the occurrence of a predetermined state, whereupon the parachute is ejected out of the housing (2) through an ejection opening (3) by means of the base (4) during at least a partial detensioning of the spring element, **characterized in that** the base (4) is moved to an end position, wherein the spring element is held under pre-tension in every position of the base (4) .

14. Method according to claim 13, **characterized in that** characteristic data relating to an object, to which the device (1) is connected, in particular an acceleration, are measured and the fixing means (5) is preferably automatically triggered when the measured data exceed one or more defined, permissible maximum values.

15. Method according to claim 13 or 14, **characterized in that** permissible maximum values are determined automatically during normal operation and are stored in a data memory, whereupon measured data are compared with the stored data in order to determine an abnormal operating state.

## Revendications

1. Dispositif (1), destiné à éjecter un parachute, comportant un boîtier (2) doté d'une ouverture d'éjection (3), le boîtier (2) étant adapté pour recevoir au moins partiellement le parachute, dans le boîtier (2) étant placé un fond inférieur (4) mobile, lequel est relié par l'intermédiaire d'au moins un élément à ressort avec le boîtier (2), le fond inférieur (4) étant susceptible d'être fixé de manière amovible dans le boîtier (2) au moyen d'une fixation (5), le dispositif (1) étant aménagé de telle sorte que lorsqu'un parachute est placé dans le boîtier (2), lors de la désolidarisation de la fixation (5), le fond inférieur (4) soit accéléré par l'élément à ressort, de sorte que le parachute soit éjecté au moyen du fond inférieur (4) à travers l'ouverture d'éjection (3), **caractérisé en ce que** dans chaque position du fond inférieur (4), l'élément à ressort subit une précontrainte.

2. Dispositif (1) selon la revendication 1, **caractérisé en ce que** l'élément à ressort comporte une bande élastique (6), notamment une bande en caoutchouc.

3. Dispositif (1) selon la revendication 2, **caractérisé en ce que** la bande élastique (6) est guidée par l'intermédiaire d'une déviation (7), laquelle comporte de préférence un galet (8).

4. Dispositif (1) selon l'une quelconque des revendications 1 à 3, **caractérisé en ce que** le fond inférieur (4) est mobile par rapport au boîtier (2), entre deux positions finales.

5. Dispositif (1) selon l'une quelconque des revendications 1 à 4, **caractérisé en ce que** l'au moins un élément à ressort est placé sur la face extérieure du boîtier (2) et relié avec le fond inférieur (4) par l'intermédiaire de goujons de guidage (10) du fond inférieur (4), guidés dans des guidages (9) du boîtier (2) et saillant hors du boîtier (2).

6. Dispositif (1) selon l'une quelconque des revendications 1 à 5, **caractérisé en ce que** la fixation (5) comporte un élément de liaison par complémentarité de forme, notamment un tourillon ou une came (11), lequel s'engage dans un évidement (15) correspondant, pour maintenir le fond inférieur (4) à l'encontre d'une tension de l'élément à ressort.

7. Dispositif (1) selon l'une quelconque des revendications 1 à 6, **caractérisé en ce qu'**un récepteur radio est prévu et relié avec la fixation (5), de telle sorte que la fixation (5) puisse être désolidarisée au moyen d'un signal radio.

8. Dispositif (1) selon l'une quelconque des revendications 1 à 7, **caractérisé en ce qu'**il est prévu au moins un capteur d'accélération, lequel est en liaison active avec la fixation (5), de telle sorte que lors d'une accélération mesurée, laquelle dépasse une valeur définie, la fixation (5) se désolidarise.

9. Dispositif (1) selon l'une quelconque des revendications 1 à 8, **caractérisé en ce qu'**il est prévu un système de traitement de données, à l'aide duquel une désolidarisation de la fixation (5) peut avoir lieu de manière automatisée.

10. Dispositif (1) selon la revendication 9, **caractérisé en ce qu'**il est prévu une mémoire de données, dans laquelle sont mémorisées des données maximales, concernant notamment des accélérations maximales, des capteurs destinés à déterminer des données actuelles correspondantes lors d'un fonctionnement étant prévus, le dispositif (1) étant aménagé de telle sorte que la fixation (5) se désolidarise si au moyen du système de traitement de données, il est constaté que des données actuellement mesurées dépassent des données maximales mémorisées.

11. Dispositif (1) selon la revendication 10, **caractérisé en ce que** le système de traitement de données est aménagé pour déterminer et pour mémoriser des données, notamment des accélérations, lesquelles se produisent lors d'un fonctionnement normal d'un objet, avec lequel le dispositif (1) est relié.

12. Engin volant, notamment drone, pourvu d'un dispositif (1) destiné à éjecter un parachute, **caractérisé en ce que** le dispositif (1) est conçu selon l'une quelconque des revendications 1 à 11.

13. Procédé, destiné à éjecter un parachute, lors duquel on fixe de manière amovible un fond inférieur (4) dans un boîtier (2) d'un dispositif (1), notamment d'un dispositif (1) selon l'une quelconque des revendications 1 à 11 sur une fixation (5), en mettant sous tension un élément à ressort, suite à quoi la fixation (5) se désolidarise lors de la production d'un état prédéfini, suite à quoi le parachute est éjecté hors du boîtier (2), au moyen du fond inférieur (4) hors d'une ouverture d'éjection (3), sous détente au moins partielle de l'élément à ressort, **caractérisé en ce que** le fond inférieur (4) se déplace jusqu'à une position finale, dans chaque position du fond inférieur (4), l'élément à ressort étant maintenu sous précontrainte.

14. Procédé selon la revendication 13, **caractérisé en ce qu'**on mesure des données caractéristiques, notamment une accélération concernant un objet avec lequel le dispositif (1) est relié, et la fixation (5) se désolidarise de préférence de manière automatisée si les données mesurées dépassent une ou plusieurs valeurs maximales admissibles définies.

15. Procédé selon la revendication 13 ou 14, **caractérisé en ce que** des valeurs maximales admissibles sont déterminées de manière automatisée lors d'un fonctionnement normal et mémorisées dans une mémoire de données, suite à quoi, des données sont comparées avec les données mémorisées, pour déterminer un état de fonctionnement inhabituel.
